# EUROPÄISCHE PATENTSCHRIFT

(11) **EP 2 033 550 B1**
(45) Veröffentlichungstag und Bekanntmachung des Hinweises auf die Patenterteilung: **29.05.2013**
(21) Anmeldenummer: 08012076.9
(22) Anmeldetag: 04.07.2008
(51) Int. Cl.: A47J 31/36

(54) **Brühgruppe für eine Kaffeemaschine**
Brewing element for a coffee machine
Unité d'infusion pour une machine à café

(30) Priorität: 06.09.2007 DE 102007042379
(43) Veröffentlichungstag der Anmeldung: 11.03.2009
(73) Patentinhaber: Severin Elektrogeräte GmbH, 59846 Sundern (DE)
(72) Erfinder: Kroesen, Klaus, 46509 Xanten (DE)
(74) Vertreter: Köchling, Conrad-Joachim

(56) Entgegenhaltungen:
- DE-U1-202005 018 607
- US-A1- 2005 193 891

## Beschreibung

Die Erfindung betrifft eine Brühgruppe für eine Kaffeemaschine, insbesondere zur Zubereitung von Espresso, mit einer Brühkammer zur Aufnahme von gemahlenem Kaffeemehl sowie mit Teilen für die Verdichtung des in der Brühkammer befindlichen Kaffeemehls, zum Auswerfen des feuchten Kaffeemehlrestes aus der Brühkammer, wobei des Weiteren Anschlüsse für die Zufuhr von Heißwasser und für den Ablauf des Filtrates vorgesehen sind.

Im Stand der Technik sind solche Brühgruppen bekannt. Hierzu wird beispielsweise auf die DE 20 2005 018 607 U1 verwiesen, die einen entsprechenden Getränkebereiter beschreibt. Hierbei wird die Brühkammer der Brühgruppe zum Einfüllen des Kaffees unter den Kaffeezulauf geschoben, anschließend wieder bewegt, um die Einführöffnung zu verschließen. Die Kolben bewegen sich in der Brühkammer zur Verdichtung des Kaffeemehls. Nach dem Brühen wird der Kaffeemehlrest ausgeworfen.

In der CH 681 955 A5 wird ein ähnlich arbeitender Kaffeebereiter beschrieben, der einen stationär angeordneten Zylinder als Brühkammer beschreibt.

Insbesondere bei Kaffeevollautomaten wird mit solchen Einrichtungen eine Portion Kaffee nach folgendem Ablaufprinzip erstellt:

Die Kaffeebohnen werden zu einer Portion Kaffeemehl gemahlen und das Mehl wird in eine Brühkammer der Brühgruppe geladen. Das Kaffeemehl wird in der Brühkammer der Brühgruppe verdichtet.

Durch das verdichtete Kaffeemehl wird mit Hochdruck von beispielsweise 15 bar heißes Wasser gepumpt. Der entstehende Kaffee, also das Filtrat, läuft durch einen Auslauf in eine bereitzustellende Tasse.

Der feuchte Kaffeemehlrest, auch Trester genannt, wird aus der Brühkammer ausgestoßen.

Bei den bekannten Geräten wird dieses Ablaufprinzip dadurch realisiert, dass die Brühkammer der Brühgruppe bewegt wird, indem sie unter das Mahlwerk geschoben wird und Kaffeemehl eingefüllt wird. Anschließend wird die Brühkammer verschoben, damit die Einfüllöffnung verschlossen wird. Durch zwei separate Kolben, die gegenläufig in die zylindrische Brühkammer eingreifen, erfolgt eine Verdichtung des Kaffeemehls und nach dem Durchbrühen des Kaffeemehls ein Auswurf des feuchten Kaffeemehlrestes.

Das ablaufgesteuerte Bewegen der Brühkammer und zweier Kolben erfordert eine aufwendige Mechanik und Steuerung. Darüber hinaus ist eine einfache Entnahme einer solchen Brühgruppe zum Zwecke der Reinigung überwiegend bei solchen Geräten nicht möglich.

Aus der US 2005/0193891 Al ist eine Kaffeemaschine mit einer Brühgruppe bekannt, bei der die Brühkammer eine gebogene Form aufweist. Die Brühkammer wird einerseits durch eine bewegliche Platte verschlossen, die sich auf einem Radius bewegen kann und andererseits durch einen Kolben, der sich ebenfalls auf einem Radius bewegen kann. Der Kolben kann soweit entfernt werden, dass Kaffeemehl in die Brühkammer eingeführt werden kann. Anschließend kann der Kolben verschwenkt werden, so dass das Kaffeemehl komprimiert und von Wasser durchströmt werden kann, um das entsprechende Getränk zu erzeugen. Dabei sind die Bewegungsabläufe besonders zu steuern, da nicht eine einfache axiale Bewegung, sondern eine Bewegung auf Kreisbögen erforderlich ist. Zudem erfolgt die Verdichtung in der Brühkammer nicht gleichmäßig, sondern entsprechend der Form der Brühkammer und der Bewegung der entsprechenden Kompressionsteile wird das Kaffeemehl in dem Bereich, der der Drehachse der Kolben und dergleichen zugewandt ist, höher verdichtet als in dem Bereich, der der Drehachse abgewandt ist.

Ausgehend von diesem Stand der Technik liegt der Erfindung die Aufgabe zugrunde, eine Brühkammer gattungsgemäßer Art zu schaffen, die nur wenige bewegte Teile aufweist, daher günstig herzustellen ist, und einen störungsfreien Betrieb über lange Zeit ermöglicht.

Zur Lösung dieser Aufgabe schlägt die Erfindung vor, dass die Brühkammer durch einen stationären unbeweglich angeordneten Zylinder gebildet ist, der seitlich nahe seines ersten Endes eine Befüllöffnung für Kaffeemehl aufweist, dass als Teil für die Verdichtung des in die Brühkammer eingefüllten Kaffeemehls am ersten Ende des Zylinders ein mittels eines ersten Stellantriebes axial verstellbarer Kolben vorgesehen ist, der in der Befüllstellung die Befüllöffnung freilässt und in der Brühstellung mit seinem Mantel die Befüllöffnung mindestens teilweise verschließt, dass am zweiten Ende des Zylinders eine Verschlussplatte mit zweitem Stellantrieb vorgesehen ist, die in der Befüllstellung und in der Brühstellung das zweite Ende des Zylinders verschließt und in der Auswurfstellung das zweite Ende des Zylinders freigibt, wobei der Kolben in der Auswurfstellung bei in Freigabelage verstellter Verschlussplatte mittels des ersten Stellantriebes in eine Auswurfstellung in Richtung zum zweiten Ende des Zylinders verstellbar ist, wobei der Kolben und die Verschlussplatte nach dem Auswerfen des feuchten Kaffeemehlrestes in die Ausgangsstellung zurück verstellbar sind, und wobei die Anschlüsse für Heißwasserzufuhr und Filtratablauf am Kolben und an der Verschlussplatte vorgesehen sind.

Gemäß dieser Ausbildung ist die Brühkammer der Brühgruppe nicht beweglich, sondern starr angeordnet und mit einer seitlichen Befüllöffnung versehen. Des Weiteren ist lediglich ein beweglicher Kolben vorgesehen, der sowohl die Verdichtung des in der Brühkammer befindlichen Kaffeemehls übernimmt als auch den Auswurf des feuchten Kaffeemehlrestes. Zudem ist lediglich noch eine Verschlussplatte vorgesehen, die an der dem Kolben gegenüberliegenden Endseite der Brühkammer angebracht ist. Diese Verschlussplatte kann beispielsweise durch eine Schwenkbewegung in die Brühlage verstellt werden, in der das entsprechende Ende des Zylinders verschlossen ist oder aber in eine Auswurflage, in der das Ende des Zylinders freigegeben ist, so dass durch den Kolben der feuchte Kaffeemehlrest aus dem Zylinder herausgedrückt werden kann. Die entsprechende Brühgruppe weist im Vergleich zu bekannten Ausbildungen nur wenige bewegte Teile auf. Dies erlaubt nicht nur eine kostengünstige Herstellung und einen störungsfreien Betrieb, sondern die Bewegungssteuerung ist auch gegenüber den herkömmlichen Ausbildungsformen erheblich vereinfacht. Die Anschlüsse für die Heißwasserzufuhr können entweder am Kolben oder an der Verschlussplatte vorgesehen sein. Ebenso sind die Anschlüsse für den Filtratablauf entweder an der Verschlussplatte oder am Kolben vorgesehen, so dass in jedem Falle eine Durchströmung des in der zwischen Kolben und Verschlussplatte gebildeten Kammer ermöglicht ist.

Bei dieser Anordnung werden auch kurze Wasserführungswege erreicht, so dass das heiß zugeführte Wasser beim Brühvorgang kaum abkühlt. Die Anordnung der feststehenden Brühkammer mit der Befüllöffnung ermöglicht es auch, direkt an der Befüllöffnung ein Mahlwerk zum Mahlen von Kaffee anzuordnen. Wegen der unbeweglichen Anordnung der Brühkammer ist ein Anschluss eines Mahlwerkes problemlos durchzuführen.

Besonders bevorzugt ist dabei vorgesehen, dass der Kolben mit einer Kolbenstange versehen ist, die als Zahnstange oder Gewindespindel ausgebildet ist, und an gestellfesten Teilen der Brühgruppe ein erster elektrischer Antriebsmotor angeordnet ist, der über ein Ritzel oder eine Spindelmutter mit der Zahnstange beziehungsweise Gewindespindel verbunden ist.

Durch diese Ausbildung wird ein sehr einfacher Antrieb für den Kolben vorgesehen, der störungsfrei ist, wobei durch einen Zahnstangenantrieb oder einen Spindelantrieb eine exakte Einstellung der Kolbenwege in einfacher Weise zu realisieren ist.

Ferner ist bevorzugt vorgesehen, dass die Verschlussplatte an einem Stellhebel angelenkt ist, der mit seinem freien Ende exzentrisch an einer mittels des zweiten Stellantriebes drehbaren ersten Welle angeordnet ist, so dass die Verschlussplatte axial zum Zylinder verstellbar und in der Öffnungslage begrenzt schwenkbar ist.

Durch diese Anordnung ist es möglich, die Verschlussplatte nicht nur in die Gebrauchslage und in die Freigabelage zu verschwenken, sondern beim Verschwenken der Verschlussplatte aus der Freigabestellung in die Gebrauchsstellung wird zusätzlich noch der Schwenkbewegung eine axiale Stellbewegung der Verschlussplatte überlagert, so dass diese den Zylinder dicht abschließen kann und ein unerwünschtes Austreten von Kaffeemehl und/oder Flüssigkeit behindert ist.

Vorzugsweise weist dazu die Verschlussplatte noch eine umlaufende oder stirnseitig vorgesehene Dichtung auf, die in der Öffnungsstellung der Verschlussplatte zugänglich ist, um diese gegebenenfalls reinigen zu können.

Des Weiteren ist bevorzugt vorgesehen, dass die drehbare erste Welle an Gehäuseteilen gelagert ist und an ihren Endbereichen Zahnräder trägt, die mit einer gezahnten zweiten Welle kämmen, die parallel zur ersten Welle gehalten ist und mittels des zweiten Stellantriebes über ein Zahnrad sowie eine Schnecke mit einem zweiten elektrischen Antriebsmotor gekoppelt ist.

Hierdurch wird ein einfacher und kostengünstiger Antrieb zur Verfügung gestellt, mittels dessen die Verschlussplatte bewegbar und betätigbar ist, wobei durch die entsprechende Anordnung eine achsgerechte Verstellung der Verschlussplatte relativ zum Zylinder einfach zu realisieren ist.

Zusätzlich kann vorgesehen sein, dass an der Verschlussplatte eine Wischlippe angeordnet ist.

Vorzugsweise kann eine solche Wischlippe an der Randkante der Verschlussplatte vorgesehen sein, die in der Öffnungsstellung gesehen vorn liegt, so dass beim Schließen der Verschlussplatte die Mündung des Zylinders beziehungsweise die bis zur Mündung des Zylinders vorgeschobene Kolbenfläche durch die Wischlippe von anhaftenden Resten befreit werden kann, bevor die Verschlussplatte dann ihre Gebrauchslage einnimmt, in der der Kolben in die Ausgangslage zurückgezogen ist.

Eine besonders vorteilhafte Weiterbildung, die auch als selbstständig erfinderisch angesehen wird, wird darin gesehen, dass die Brühgruppe ein erstes Gehäuseteil aufweist, welches den Zylinder, den Kolben samt Kolbenstange, die Befüllöffnung gegebenenfalls mit Befülltrichter, die Verschlussklappe gegebenenfalls samt Stellhebel, erster Welle und Zahnrädern aufnimmt oder hält, ein zweites Gehäuseteil, das bügelartig ausgebildet ist und den ersten Antriebsmotor, den zweiten Antriebsmotor und gegebenenfalls die zweite Welle samt Zahnrad und Schnecke trägt, sowie ein drittes Gehäuseteil, in welches das erste Gehäuseteil einschiebbar montiert ist und an dem das zweite Gehäuseteil schwenkbar gehalten ist, so dass es in eine Montagelage verstellbar ist, in der das erste Gehäuseteil aus dem dritten Gehäuseteil herausziehbar beziehungsweise in dieses einschiebbar ist, und in eine Gebrauchslage in der das in das dritte Gehäuseteil eingeschobene erste Gehäuseteil durch das zweite Gehäuseteil arretiert ist und die Antriebsmotoren mit den zu betätigenden Antriebselementen wirk verbunden sind.

Diese Anordnung ermöglicht es, das erste Gehäuseteil mit sämtlichen Bestandteilen aus der Brühgruppe zu entnehmen, um es in einfacher Weise reinigen zu können. Sämtliche Bestandteile, die möglicherweise einer Reinigung bedürfen, sind Bestandteil des ersten Gehäuseteiles. Das dritte Gehäuseteil dient zur Aufnahme des ersten Gehäuseteiles und zur Lagerung des schwenkbeweglichen zweiten Gehäuseteiles, welches die Antriebsmotoren als wesentliche Elemente beinhaltet. Durch diese Anordnung ist nicht nur eine einfache Entnahme des ersten Gehäuseteiles samt Funktionsteilen ermöglicht, sondern auch die Herstellung und der Zusammenbau der gesamten Brühgruppe ist hierdurch vereinfacht.

Vorzugsweise ist dabei vorgesehen, dass das zweite Gehäuseteil in der Gebrauchslage an dem ersten Gehäuseteil und/oder dem dritten Gehäuseteil verrastet ist.

Zudem kann bevorzugt vorgesehen sein, dass das erste und das dritte Gehäuseteil Längsführungsnuten oder -rippen aufweisen, die in Gebrauchslage ineinander greifen.

Ein Ausführungsbeispiel der Erfindung ist in der Zeichnung dargestellt und im Folgenden näher beschrieben. Es zeigt:
- Figur 1: eine erfindungsgemäße Brühgruppe im Mittellängsschnitt gesehen;
- Figur 2: die Brühgruppe nach dem Befüllen mit Kaffeemehl;
- Figur 3: die Brühgruppe nach dem Verdichten des Kaffeemehls in der Brühstellung;
- Figur 4: die Brühgruppe nach dem Brühvorgang beim Ausschieben des Tresters;
- Figur 5: die komplette Brühgruppe in Schrägansicht von schräg vorn gesehen;
- Figur 6: die Brühgruppe in einer Zwischenstellung mit dem in Montagelage geschwenktem zweiten Gehäuseteil;
- Figur 7: die Brühgruppe mit hochgeschwenktem zweiten Gehäuseteil und aus dem dritten Gehäuseteil herausgezogenem ersten Gehäuseteil.

Die in den Figuren dargestellte Brühgruppe dient zur Zubereitung von Kaffee in einer Kaffeemaschine. Die in diesem Zusammenhang nicht interessierenden Bestandteile der Kaffeemaschine sind in der Zeichnung nicht gezeigt.

Die Brühgruppe weist eine Brühkammer 1 zur Aufnahme von gemahlenem Kaffeemehl 2 auf sowie Teile für die Verdichtung des in der Brühkammer 1 befindlichen Kaffeemehls und zum Auswerfen des feuchten Kaffeemehlrestes 3 aus der Brühkammer 1. In der Zeichnung nicht gezeigt sind Anschlüsse für die Zufuhr von Heißwasser und für den Ablauf des Filtrates.

Die Brühkammer 1 ist durch einen stationären unbeweglich angeordneten Zylinder 4 gebildet.

Dieser weist seitlich nahe seines in der Zeichnung oberen, ersten Endes eine Befüllöffnung 5 für Kaffeemehl auf, wobei im Ausführungsbeispiel an die Befüllöffnung 5 noch ein Einfülltrichter 6 für Kaffeemehl angeschlossen ist. Hierdurch kann unmittelbar Kaffeemehl eingegeben werden. Es ist auch möglich, über den Befülltrichter 6 ein Mahlwerk für Kaffee anzuordnen, so dass portionsweise Kaffee gemahlen und über den Befülltrichter 6 zugeführt werden kann.

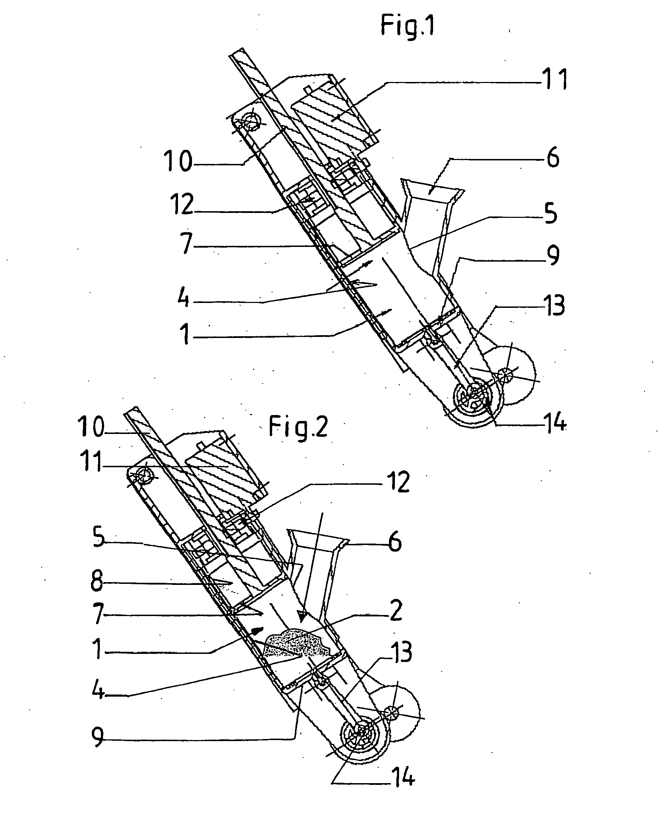

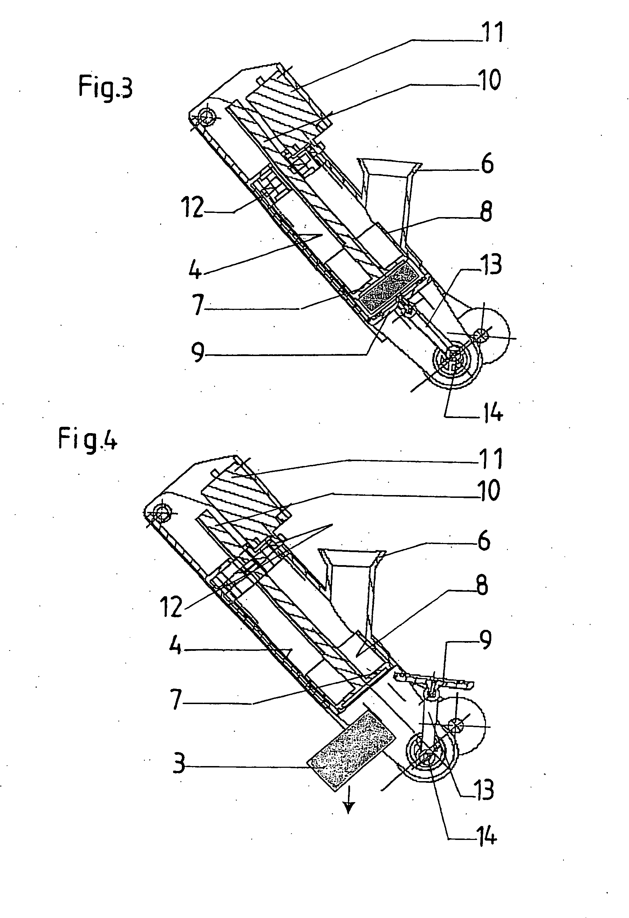

Als Teil für die Verdichtung des in die Brühkammer 1 eingefüllten Kaffeemehls 2 ist am oberen, ersten Ende des Zylinders 4 ein mittels eines ersten Stellantriebes axial verstellbarer Kolben 7 mit umlaufender Dichtlippe vorgesehen. Wie aus Figur 1 und 2 ersichtlich, lässt der Kolben 7 in der Befüllstellung die Befüllöffnung 5 frei. In der Brühstellung, die beispielsweise in Figur 3 gezeigt ist, verschließt der Kolben 7 mit seinem Mantel 8 die Befüllöffnung 5 mindestens teilweise. Je nach Ausbildung und Anordnung kann die Befüllöffnung 5 auch hinter dem Kolben 7 freiliegen. In jedem Falle ist in der Brühstellung der Kompressionsraum zwischen Kolben 7 und einer Verschlussplatte 9 gegenüber der Befüllöffnung 5 abgeschlossen.

Am zweiten Ende des Zylinders 4 ist eine Verschlussplatte 9 vorgesehen, die mittels eines zweiten Stellantriebes betätigbar ist. Wie in Figur 1 bis 3 ersichtlich, verschließt diese Verschlussplatte in der Befüllstellung und in der Brühstellung das zweite, untere Ende des Zylinders 4, während sie in der Auswurfstellung gemäß Figur 4 das untere Ende des Zylinders 4 freigibt, so dass der Trester durch eine entsprechende weitere Vorbewegung des Kolbens 7 ausgeworfen werden kann. Der Kolben nimmt also prinzipiell vermittelt durch den Stellantrieb drei unterschiedliche Positionen ein, nämlich erstens die Position, die in Figur 1 und 2 gezeigt ist, in der der Kolben hinter der Befüllöffnung 5 zurückliegt, zweitens die Stellung gemäß Figur 3, in der der Kolben 7 eine Verdichtungsposition jenseits der Befüllöffnung 5 einnimmt und schließlich gemäß Figur 4 eine Auswurfstellung, in der der Kolben bis zum unteren Ende des Zylinders 4 vorgeschoben ist.

Nach dem Auswerfen des Tresters 3 gemäß Figur 4 bewegen sich sämtliche Bestandteile in die Ausgangslage zurück, die in Figur 1 und 2 gezeigt ist.

Die Anschlüsse für Heißwasserzufuhr und Filtratablauf können am Kolben 7 respektive an der Auswurfplatte 9 vorgesehen sein, so dass das Wasser entweder in Stellrichtung des Kolbens 7 zum Zwecke des Verdichtens des Kaffeemehl durchfließt oder aber in entgegen gesetzter Richtung.

Der Kolben 7 ist mit einer Kolbenstange 10 versehen, die rückwärtig von dem Kolben 7 abragt. Diese Kolbenstange 10 ist vorzugsweise als Gewindespindel ausgebildet. An gestellfesten Teilen der Brühgruppe ist ein erster elektrischer Antriebsmotor 11 angeordnet, der über ein Ritzel 12 oder eine Spindelmutter mit der Kolbenstange 10 wirkverbunden ist, so dass bei Betätigung des Antriebsmotors 11 eine Verstellung der Kolbenstange 10 aus der Position gemäß Figur 1 in die Position gemäß Figur 3 und schließlich in die Position gemäß Figur 4 erfolgt und bei gegensinnigem Antrieb des Stellmotors 11 eine Zurückverlagerung der Kolbenstange aus der Position gemäß Figur 4 in die Position gemäß Figur 1 erfolgt.

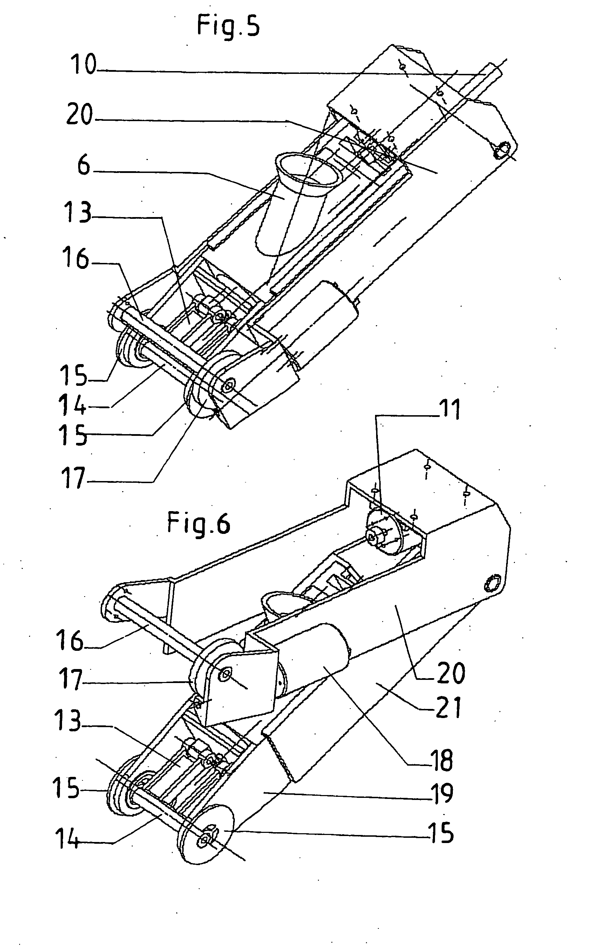

Die Verschlussplatte 9 ist an einem Stellhebel 13 angelenkt, der mit seinem freien Ende exzentrisch auf einer mittels des zweiten Stellantriebes drehbaren ersten Welle 14 angeordnet ist, so dass die Verschlussplatte nicht nur schwenkbar ist, sondern auch axial zum Zylinder hin und von diesem weg verstellbar ist. In der Gebrauchslage ist die Verschlussplatte 9 zum Zylinder 4 hin verstellt und greift vorzugsweise in dessen Mündung ein. Zum Auswerfen des Tresters gemäß Figur 4 wird die Verschlussplatte 9 mittels des Exzenters von der Mündung des Zylinders 4 abgehoben und nachfolgend beispielsweise um ca. 45 ° verschwenkt, wie in Figur 4 ersichtlich, so dass durch das Vorschieben des Kolbens 7 der Trester 3 ausgeworfen werden kann. Die drehbare erste Welle 14 ist, wie beispielsweise aus Figur 6 ersichtlich, an Gehäuseteilen drehbar gelagert und trägt an ihren Endbereichen Zahnräder 15. Diese kommen in der Gebrauchslage, wie sie in Figur 5 beispielsweise gezeigt ist, mit einer gezahnten zweiten Welle 16, die parallel zur ersten Welle 14 gehalten ist und mittels des zweiten Stellantriebes über ein Zahnrad 17 und eine Schnecke mit einem zweiten elektrischen Antriebsmotor 18 gekoppelt ist. Zusätzlich kann an der Verschlussplatte 9 an der in Figur 1 bis 3 unteren Randkante eine Wischlippe angeordnet sein, die eine Reinigung der Kolbenfläche des Kolbens 7 bei der Zurückbewegung der Stellung gemäß Figur 4 in die Stellung gemäß Figur 1 bewirkt.

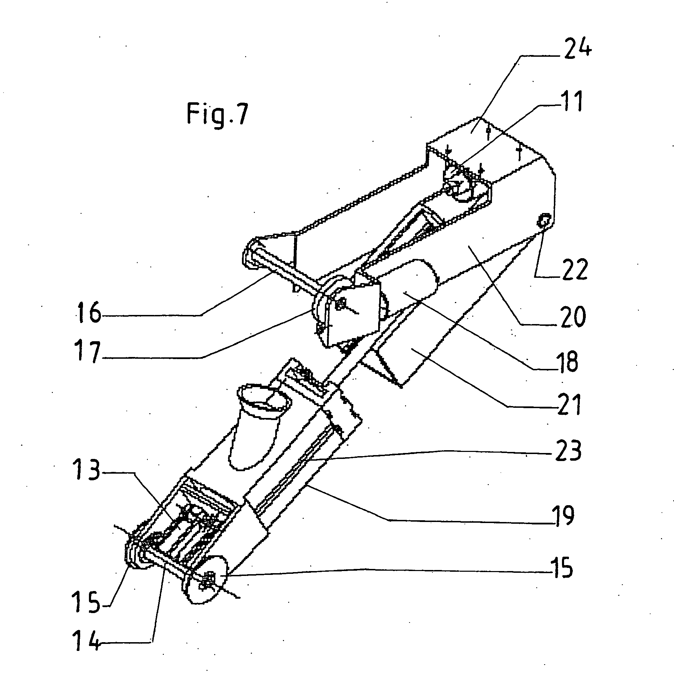

Als hervorragende Besonderheit weist die Brühgruppe ein erstes Gehäuseteil 19 auf, welches den Zylinder 4, den Kolben 7 samt Kolbenstange 10, die Befüllöffnung 5 gegebenenfalls nebst Befülltrichter 6, die Verschlussklappe 9 samt Stellhebel 13, erster Welle 14 und Zahnrädern 15 aufnimmt oder hält. Ein zweites Gehäuseteil 20 ist bügelartig ausgebildet und trägt den ersten Antriebsmotor 11, den zweiten Antriebsmotor 18 sowie die zweite Welle 16 samt Zahnrad 17 und nicht dargestellter Schnecke. In ein drittes Gehäuseteil 21 ist das erste Gehäuseteil 19 einschiebbar, wie aus der Darstellung gemäß Figur 7 ersichtlich ist. Das zweite Gehäuseteil 20 ist bei 22 an dem dritten Gehäuseteil 21 schwenkbeweglich gehalten, so dass es in eine Montagelage verstellbar ist, die in Figur 7 gezeigt ist. In dieser Lage ist das erste Gehäuseteil 19 vollständig aus dem dritten Gehäuseteil 21 herausziehbar und kann gereinigt werden. Anschließend kann es wieder in das dritte Gehäuseteil 21 lagerichtig eingeschoben werden. In der eingeschobenen Lage, die in Figur 6 gezeigt ist, kann das erste Gehäuseteil 19 durch Herunterschwenken des zweiten Gehäuseteils 20 arretiert und lagegesichert werden, wobei in dieser Stellung dann, wie in Figur 5 gezeigt, die entsprechenden Antriebselemente miteinander in Eingriff sind.

Um diese Lage, die in Figur 5 gezeigt ist, zu sichern, kann das zweite Gehäuseteil 20 an dem ersten Gehäuseteil 19 und/oder an dem dritten Gehäuseteil 21 verrastet sein. Es sind auch andere Fixierungsmittel denkbar, mittels derer die Position gesichert werden kann, die in Figur 5 gezeigt ist. Um die entsprechende Führung beim Zusammenführen der Teile 19 und 21 zu ermöglichen, können am ersten Gehäuseteil 19 und entsprechend am dritten Gehäuseteil 21 Längsführungsnuten oder - rippen 23 ausgebildet sein.

Es ist möglich, dass zweite Gehäuseteil 20 gestellfest zu haltern, wobei dieses Gehäuseteil dann im Bereich der Platte 24 an einem entsprechenden Bestandteil der Kaffeemaschine befestigt wird. Hierbei kann dann das erste Gehäuseteil 19 zusammen mit dem Gehäuseteil 21 aus der Gebrauchsstellung gemäß Figur 5 in eine Stellung gemäß Figur 6 verlagert werden, in der das erste Gehäuseteil 19 dann aus dem dritten Gehäuseteil 21 herausgezogen werden kann. Auf diese Weise ist das Gehäuseteil 19 in einfacher Weise aus der gesamten Brühgruppe zu entnehmen, so dass eine separate Reinigung der wesentlichen Bestandteile ermöglicht ist.

## Patentansprüche

1. Brühgruppe für eine Kaffeemaschine, insbesondere zur Zubereitung von Espresso, mit einer Brühkammer (1) zur Aufnahme von gemahlenem Kaffeemehl (2) sowie mit Teilen für die Verdichtung des in der Brühkammer (1) befindlichen Kaffeemehls (2), zum Auswerfen des feuchten Kaffeemehlrestes (3) aus der Brühkammer (1), wobei des Weiteren Anschlüsse für die Zufuhr von Heißwasser und für den Ablauf des Filtrates vorgesehen sind, **dadurch gekennzeichnet, dass** die Brühkammer (1) durch einen stationären unbeweglich angeordneten Zylinder (4) gebildet ist, der seitlich nahe seines ersten Endes eine Befüllöffnung (5) für Kaffeemehl aufweist, dass als Teil für die Verdichtung des in die Brühkammer (1) eingefüllten Kaffeemehls am ersten Ende des Zylinders (4) ein mittels eines ersten Stellantriebes axial verstellbarer Kolben (7) vorgesehen ist, der in der Befüllstellung die Befüllöffnung (5) freilässt und in der Brühstellung mit seinem Mantel die Befüllöffnung (5) mindestens teilweise verschließt, dass am zweiten Ende des Zylinders (4) eine Verschlussplatte (9) mit zweitem Stellantrieb vorgesehen ist, die in der Befüllstellung und in der Brühstellung das zweite Ende des Zylinders (4) verschließt und in der Auswurfstellung das zweite Ende des Zylinders (4) freigibt, wobei der Kolben (7) in der Auswurfstellung bei in Freigabelage verstellter Verschlussplatte (9) mittels des ersten Stellantriebes in eine Auswurfstellung in Richtung zum zweiten Ende des Zylinders (4) verstellbar ist, wobei der Kolben (7) und die Verschlussplatte (9) nach dem Auswerfen des feuchten Kaffeemehlrestes (3) in die Ausgangsstellung zurück verstellbar sind, und wobei die Anschlüsse für Heißwasserzufuhr und Filtratablauf am Kolben (7) und an der Verschlussplatte (9) vorgesehen sind.

2. Brühgruppe nach Anspruch 1, **dadurch gekennzeichnet, dass** der Kolben (7) mit einer Kolbenstange (10) versehen ist, die als Zahnstange oder Gewindespindel ausgebildet ist, und an gestellfesten Teilen der Brühgruppe ein erster elektrischer Antriebsmotor (11) angeordnet ist, der über ein Ritzel oder eine Spindelmutter (12) mit der Zahnstange beziehungsweise Gewindespindel (10) verbunden ist.

3. Brühgruppe nach Anspruch 1 oder 2, **dadurch gekennzeichnet, dass** die Verschlussplatte (9) an einem Stellhebel (13) angelenkt ist, der mit seinem freien Ende exzentrisch an einer mittels des zweiten Stellantriebes drehbaren ersten Welle (14) angeordnet ist, so dass die Verschlussplatte (9) axial zum Zylinder (4) verstellbar und in der Öffnungslage begrenzt schwenkbar ist.

4. Brühgruppe nach Anspruch 3, **dadurch gekennzeichnet, dass** die drehbare erste Welle (14) an Gehäuseteilen gelagert ist und an ihren Endbereichen Zahnräder (15) trägt, die mit einer gezahnten zweiten Welle (16) kämmen, die parallel zur ersten Welle (14) gehalten ist und mittels des zweiten Stellantriebes über ein Zahnrad (17) sowie eine Schnecke mit einem zweiten elektrischen Antriebsmotor (18) gekoppelt ist.

5. Brühgruppe nach einem der Ansprüche 1 bis 4, **dadurch gekennzeichnet, dass** an der Verschlussplatte (9) eine Wischlippe angeordnet ist.

6. Brühgruppe nach einem der Ansprüche 1 bis 5, **dadurch gekennzeichnet, dass** die Brühgruppe ein erstes Gehäuseteil (19) aufweist, welches den Zylinder (4), den Kolben (7) samt Kolbenstange (10), die Befüllöffnung (5) gegebenenfalls mit Befülltrichter (6), die Verschlussklappe (9) gegebenenfalls samt Stellhebel (13), erster Welle (14) und Zahnrädern (15) aufnimmt oder hält, ein zweites Gehäuseteil (20), das bügelartig ausgebildet ist und den ersten Antriebsmotor (11), den zweiten Antriebsmotor (18) und gegebenenfalls die zweite Welle (16) samt Zahnrad (17) und
Schnecke trägt, sowie ein drittes Gehäuseteil (21), in welches das erste Gehäuseteil (19) einschiebbar montiert ist und an dem das zweite Gehäuseteil (20) schwenkbar gehalten ist, so dass es in eine Montagelage verstellbar ist, in der das erste Gehäuseteil (19) aus dem dritten Gehäuseteil (21) herausziehbar beziehungsweise in dieses einschiebbar ist, und in eine Gebrauchslage, in der das in das dritte Gehäuseteil (21) eingeschobene erste Gehäuseteil (19) durch das zweite Gehäuseteil (20) arretiert ist und die Antriebsmotoren (11,18) mit den zu betätigenden Antriebselementen wirkverbunden sind.

7. Brühgruppe nach Anspruch 6, **dadurch gekennzeichnet, dass** das zweite Gehäuseteil (20) in der Gebrauchslage an dem ersten Gehäuseteil (19) und/oder dem dritten Gehäuseteil (21) verrastet ist.

8. Brühgruppe nach Anspruch 6 oder 7, **dadurch gekennzeichnet, dass** das erste und das dritte Gehäuseteil (19,21) Längsführungsnuten oder -rippen (23) aufweisen, die in Gebrauchslage ineinander greifen.

## Claims

1. A brewing module for a coffee machine, in particular for preparing espresso, comprising a brewing chamber (1) for receiving ground coffee (2) and comprising parts for compressing the ground coffee (2) in the brewing chamber (1), for ejecting the humid ground coffee remainder (3) from the brewing chamber (1), further ports being provided for supplying hot water and for discharging the filtrate, **characterized in that** the brewing chamber (1) is formed by a stationary unmovable cylinder (4) that comprises a filling opening (5) for ground coffee laterally close to its first end, that as a part for compressing the ground coffee filled into the brewing chamber (1), a piston (7) axially adjustable by means of a first actuator is provided at the first end of the cylinder (4), in the filling position said piston (7) leaving the filling opening (5) open and in the brewing position at least partially closing the filling opening (5) with its jacket, that a closure plate (9) with a second actuator is provided at the second end of the cylinder (4), in the filling position and in the brewing position said closure plate (9) closing the second end of the cylinder (4) and in the ejection position releasing the second end of the cylinder (4), in the ejection position the piston (7) being adjustable, when the closure plate (9) is moved into the release position, by means of the first actuator into an ejection position in the direction of the second end of the cylinder (4), after ejection of the humid ground coffee remainder (3) the piston (7) and the closure plate (9) being movable back into the initial position, and the ports for hot water inlet and filtrate outlet being provided at the piston (7) and at the closure plate (9).

2. The brewing module according to claim 1, **characterized in that** the piston (7) is provided with a piston rod (10) in the form of a gear rack or a threaded spindle, and a first electric drive motor (11) is disposed at parts of the brewing module being fixed in place on the frame, said motor (11) being connected by a pinion or a spindle nut (12) with the gear rack or the threaded spindle (10), respectively.

3. The brewing module according to claim 1 or 2, **characterized in that** the closure plate (9) is pivoted at an adjusting lever (13) that is disposed with its free end eccentrically at a first shaft (14) being rotatable by means of the second actuator, so that the closure plate (9) is axially movable to the cylinder (4) and in the opening position is pivotable to a limited degree.

4. The brewing module according to claim 3, **characterized in that** the rotatable first shaft (14) is supported at housing parts and carries gears (15) at its end sections, said gears meshing with a toothed second shaft (16) that is held in parallel to the first shaft (14) and is coupled by means of the second actuator by a gear (17) and a worm with a second electric drive motor (18).

5. The brewing module according to one of claims 1 to 4, **characterized in that** a wiping lip is provided at the closure plate (9).

6. The brewing module according to one of claims 1 to 5, **characterized in that** the brewing module comprises a first housing part (19) that receives or holds the cylinder (4), the piston (7) with piston rod (10), the filling opening (5), if applicable with a filling funnel (6), the closure flap (9), if applicable with adjusting lever (13), first shaft (14) and gears (15), a second housing part (20) that is configured in the manner of a bracket and carries the first drive motor (11), the second drive motor (18) and if applicable the second shaft (16) with gear (17) and worm, and a third housing part (21), into which the first housing part (19) can be inserted and at which the second housing part (20) is pivotally held, so that it is movable into a mounting position, in which the first housing part (19) can be pulled out from the third housing part (21) or can be inserted into it, and into a use position, in which the first housing part (19) inserted into the third housing part (21) is locked by the second housing part (20), and the drive motors (11, 18) are operatively connected with the drive elements to be actuated.

7. The brewing module according to claim 6, **characterized in that** in the use position the second housing part (20) is latched at the first housing part (19) and/or the third housing part (21).

8. The brewing module according to claim 6 or 7, **characterized in that** the first and the third housing parts (19, 21) comprise longitudinal guide grooves or ribs (23) that engage each other in the use position.

## Revendications

1. Groupe d'infusion pour une machine à café, en particulier pour la préparation de café express, ayant une chambre d'infusion (1) pour la recevoir des moulures de café (2) et des pièces pour comprimer les moulures de café (2) se trouvant dans la chambre d'infusion (1), pour éjecter le reste des moulures de café humide (3) de la chambre d'infusion (1), en outre des raccords étant prévus pour l'alimentation d'eau chaude et la sortie du filtrat, **caractérisé en ce que** la chambre d'infusion (1) est réalisée par un cylindre immobile stationnaire (4), qui comprend une orifice de remplissage (5) pour les moulures de café latéralement près de sa première extrémité, que comme une pièce pour la compression des moulures de café remplies dans la chambre d'infusion (1), un piston (7) axialement réglable au moyen d'un premier actionneur est prévu à la première extrémité du cylindre (4), qui dans la position de remplissage laisse exposée l'orifice de remplissage (5) et dans la position d'infusion au moins partiellement ferme l'orifice de remplissage (5) avec son enveloppe, qu'une plaque de fermeture (9) avec un deuxième actionneur est prévue à la deuxième extrémité du cylindre (4), dans la position de remplissage et dans la position d'infusion cette plaque de fermeture (9) fermant la deuxième extrémité du cylindre (4) et dans la position d'éjection libérant la deuxième extrémité du cylindre (4), dans la position d'éjection le piston (7) étant ajustable, si la plaque de fermeture (9) est réglée dans la position de libération, au moyen du premier actionneur dans une position d'éjection dans la direction de la deuxième extrémité du cylindre (4), après l'éjection du reste des moulures de café (3) humide le piston (7) et la plaque de fermeture (9) étant réglables en retour dans la position initiale, et les raccords pour l'alimentation d'eau chaude et la sortie du filtrat étant prévus au piston (7) et à la plaque de fermeture (9).

2. Groupe d'infusion selon la revendication 1, **caractérisé en ce que** le piston (7) est pourvu d'une tige de piston (10) en forme d'une crémaillère ou d'une broche filetée, et un premier moteur d'entraînement électrique (11) est disposé à des parties de la groupe d'infusion étant fixées au châssis, ledit moteur (11) étant lié par un pignon ou un écrou de vissage (12) à la crémaillère ou la broche filetée (10), respectivement.

3. Groupe d'infusion selon la revendication 1 ou 2, **caractérisé en ce que** la plaque de fermeture (9) est montée à pivotement à un levier de réglage (13), qui est disposé avec son extrémité libre excentriquement à un premier arbre (14) étant rotatif au moyen du deuxième actionneur, de façon que la plaque de fermeture (9) soit axialement ajustable vers le cylindre (4) et soit pivotante à un degré limité dans la position d'ouverture.

4. Groupe d'infusion selon la revendication 3, **caractérisé en ce que** le premier arbre rotatif (14) est monté à des parties du boîtier et porte des roues dentées (15) à ses zones d'extrémité, ces roues s'engrenant avec un deuxième arbre denté (16), qui est maintenu en parallèle au premier arbre (14) et est accouplé au moyen du deuxième actionneur par l'intermédiaire d'une roue dentée (17) et d'une vis sans fin avec un deuxième moteur d'entraînement électrique (18).

5. Groupe d'infusion selon une des revendications 1 à 4, **caractérisé en ce qu'**une lèvre de balai est prévue à la plaque de fermeture (9).

6. Groupe d'infusion selon une des revendications 1 à 5, **caractérisé en ce que** le groupe d'infusion comprend un premier élément de boîtier (19), qui reçoit ou retient le cylindre (4), le piston (7) avec la tige de piston (10), l'orifice de remplissage (5), le cas échéant avec une trémie de remplissage (6), le clapet de fermeture (9), le cas échéant avec le levier de réglage (13), le premier arbre (14) et les roues dentées (15), un deuxième élément de boîtier (20), qui est réalisé en forme d'étrier et supporte le premier moteur d'entraînement (11), le deuxième moteur d'entraînement (18) et le cas échéant le deuxième arbre (16) avec la roue dentée (17) et la vis sans fin, et un troisième élément de boîtier (21), dans lequel le premier élément de boîtier (19) peut être inséré et auquel le deuxième élément de boîtier (20) est tenu en pivotement, de façon qu'il soit ajustable dans une position de montage, dans laquelle le premier élément de boîtier (19) peut être sorti hors du troisième élément de boîtier (21) ou peut inséré là-dedans, et dans une position d'utilisation, dans laquelle le premier élément de boîtier (19) inséré dans le troisième élément de boîtier (21) est arrêté par le deuxième élément de boîtier (20), et les moteurs d'entraînement (11, 18) sont liés opérationnellement aux éléments d'entraînement à être commandés.

7. Groupe d'infusion selon la revendication 6, **caractérisé en ce que** dans la position d'utilisation, le deuxième élément de boîtier (20) est encliqueté au premier élément de boîtier (19) et/ou au troisième élément de boîtier (21).

8. Groupe d'infusion selon la revendication 6 ou 7, **caractérisé en ce que** le premier et le troisième élément de boîtier (19, 21) comprennent des rainures ou nervures de guidage longitudinales (23), qui sont en prise les unes avec les autres dans la position d'utilisation.
